# EUROPÄISCHE PATENTSCHRIFT

(11) **EP 3 622 189 B1**
(45) Veröffentlichungstag und Bekanntmachung des Hinweises auf die Patenterteilung: **24.08.2022**
(21) Anmeldenummer: 17722441.7
(22) Anmeldetag: 09.05.2017
(51) Int. Cl.: F16D 13/70, B60K 17/02, F16H 48/00

(54) **DOPPELKUPPLUNGSEINHEIT UND ELEKTROANTRIEB MIT EINER SOLCHEN DOPPELKUPPLUNGSEINHEIT**
DUAL CLUTCH UNIT AND ELECTRIC DRIVE COMPRISING SUCH A DUAL CLUTCH UNIT
UNITÉ D'EMBRAYAGE DOUBLE ET PROPULSION ÉLECTRIQUE DOTÉE D'UNE TELLE UNITÉ D'EMBRAYAGE DOUBLE

(43) Veröffentlichungstag der Anmeldung: 18.03.2020
(73) Patentinhaber: GKN Automotive Limited, Birmingham, West Midlands B37 7YE (GB)
(72) Erfinder: RUPP, Waldemar, 50354 Hürth (DE); ABSENGER, Marc, 42285 Wuppertal (DE)
(74) Vertreter: Neumann Müller Oberwalleney Patentanwälte PartG mbB
(86) Internationale Anmeldenummer: PCT/EP2017/061065
(87) Internationale Veröffentlichungsnummer: WO 2018/206089

(56) Entgegenhaltungen:
- WO-A1-2018/095461
- JP-A- H0 218 116
- US-A1- 2006 144 665
- US-B1- 6 305 517

## Beschreibung

Die Erfindung betrifft eine Doppelkupplungseinheit zur individuellen variablen Drehmomentverteilung eines eingeleiteten Drehmoments auf zwei Ausgangswellen. Derartige Doppelkupplungseinheiten kommen beispielsweise in Antriebssträngen von Kraftfahrzeugen zum Einsatz, um eine gezielte Steuerung der Drehmomentverteilung zwischen zwei Fahrzeugrädern oder Fahrzeugachsen vornehmen zu können, um so die Fahrdynamik des Kraftfahrzeugs zu verbessern.

Aus der gattungsbildenden JP H02 18116 A ist eine Vorrichtung mit zwei Reibungskupplungen und zwei Klauenkupplungen bekannt. Die beiden Reibungskupplungen sind jeweils über einen hydraulischen Aktuator betätigbar. Wenn die Aktuatoren hydraulisch beaufschlagt werden, werden Verbindungselemente der Klauenkupplungen entlang von Längsnuten des Gehäuses axial bewegt und beaufschlagen die jeweils zugehörige Reibungskupplung, so dass Drehmoment vom Gehäuse über die Reibungskupplung auf das Nabenelement übertragen wird. Wenn die Aktuatoren nicht hydraulisch beaufschlagt werden, werden die Verbindungselemente durch Tellerfedern entlang der Längsnuten zurückbewegt und werden mit Nabenverzahnungen der Nabenelemente in Eingriff gebracht, so dass Drehmoment vom Gehäuse über die Klauenkupplungen auf die Nabenelemente übertragen wird.

Aus der US 6 305 517 B1 ist ein schaltbares Getriebe mit zwei Planetenstufen bekannt, die jeweils ein Sonnenrad, ein Hohlrad, mehrere Planetenräder sowie einen Planetenträger aufweisen. Der Planetenträger der ersten Planetenstufe ist mit dem Hohlrad der zweiten Planetenstufe drehfest verbunden, so dass sie gemeinsam um die Drehachse rotieren. Die Hohlräder sind jeweils durch ein separates Lamellenpaket zur Drehmomentabstützung an das ortsfeste Getriebegehäuse koppelbar. Das erste Lamellenpaket ist über eine Stützplatte gegen einen Positionierring axial abgestützt, der in einer Nut im Gehäuse fixiert ist. Das zweite Lamellenpaket ist über eine zweite Stützplatte gegen einen zweiten Positionierring axial abgestützt, der ebenfalls in der Nut fixiert ist. Die erste und die zweite Stützplatte sind axial nebeneinander angeordnet.

Aus der US 2006/144665 A1 ist eine Anordnung zum Übertragen von Kraft von zwei Antriebsquellen, wie z.B. einem Verbrennungsmotor und einem Elektromotor, auf eine Getriebeeingangswelle bekannt. Der Rotor des Elektromotors ist mit einer Kupplungsnabe verbunden. Eine erste Kupplung ist an der Kupplungsnabe vorgesehen, um eine Antriebsverbindung zwischen der Eingangswelle und der Kupplungsnabe zu schließen oder zu öffnen, und eine zweite Kupplung ist an der Kupplungsnabe befestigt, um eine Antriebsverbindung zwischen der Motorwelle und der Kupplungsnabe zu schließen oder zu öffnen.

Aus der AT 007 740 U1 ist ein elektrischer Zusatzantrieb für eine im Normalbetrieb nicht angetriebene Achse eines Kraftfahrzeugs bekannt. Der Zusatzantrieb umfasst einen Elektromotor, ein Untersetzungsgetriebe und zwei steuerbare Kupplungen, die jeweils mit einer zugehörigen Achswelle antriebsverbunden sind. Die beiden Kupplungen haben ein gemeinsames Außenteil, das als zylindrischer Hohlkörper gestaltet ist. In dem Außenteil ist ein zentrales Ringteil vorgesehen, gegen das die beiden Kupplungen axial abgestützt sind.

Die JP 2010-241178 zeigt einen Elektroantrieb mit einer ähnlichen Anordnung von Elektromotor, Untersetzungsgetriebe und Kupplungen.

Aus der DE 102 25 873 A1 ist eine weitere Antriebskraftverteilervorrichtung für ein Hybridfahrzeug bekannt. Die Vorrichtung umfasst einen Elektromotor, ein Untersetzungsgetriebe und zwei Kupplungen zur variablen Drehmomentverteilung auf die beiden Seitenwellen der zugehörigen Antriebsachse des Kraftfahrzeugs.

Permanente Anforderungen bei der Konstruktion von Bauteilen sind ein kompakter und leichter Aufbau. Bei Doppelkupplungen der oben genannten Art kann ein kompakter Aufbau dadurch erreicht werden, dass die beiden Kupplungen unmittelbar benachbart zueinander angeordnet sind.

Hiervon ausgehend liegt der vorliegenden Erfindung als Aufgabe zugrunde, eine Doppelkupplungseinheit zur steuerbaren Drehmomentverteilung auf zwei Ausgangswellen vorzuschlagen, die kompakt aufgebaut ist und eine sichere individuelle Aktuierung der beiden Kupplungen gewährleistet.

Eine Lösung besteht in einer Doppelkupplungseinheit zur variablen Drehmomentverteilung auf zwei Ausgangswellen, umfassend: ein um eine Drehachse drehend antreibbares Kupplungseingangsteil; ein erstes Lamellenpaket zur Drehmomentübertragung vom Kupplungseingangsteil auf ein erstes Kupplungsausgangsteil, wobei das erste Lamellenpaket von einer ersten Druckplatte axial beaufschlagbar ist und über eine erste Zwischenplatte axial gegen das Kupplungseingangsteil abgestützt ist; ein zweites Lamellenpaket zur Drehmomentübertragung vom Kupplungseingangsteil auf ein zweites Kupplungsausgangsteil, wobei das zweite Lamellenpaket von einer zweiten Druckplatte axial beaufschlagbar ist und über eine zweite Zwischenplatte axial gegen das Kupplungseingangsteil abgestützt ist; wobei die erste Zwischenplatte und die zweite Zwischenplatte axial zwischen dem ersten Lamellenpaket und dem zweiten Lamellenpaket angeordnet sind und derart axial ineinandergreifend gestaltet sind, dass sie unabhängig voneinander gegen das Kupplungseingangsteil axial abgestützt sind.

Ein Vorteil der Doppelkupplungseinheit ist, dass das Betätigen des einen Lamellenpakets keinerlei Einfluss auf das jeweils andere Lamellenpaket hat. Durch die axial ineinandergreifende Struktur der beiden Zwischenplatten erfolgt ein Überkreuzen der ersten Axialkräfte, die vom ersten Lamellenpaket auf das Kupplungseingangsteil wirken, und der zweiten Axialkräfte, die vom zweiten Lamellenpaket auf das Kupplungseingangsteil wirken, wobei die beiden Zwischenplatten jeweils außerhalb des Kraftflusses der jeweils anderen Zwischenplatte liegen. Ein ungewünschtes Übersprechen der jeweiligen Kupplung, das heißt ein stärkeres Ansprechen als gewünscht, wird somit verhindert. Folglich ist das an der jeweiligen Ausgangswelle benötigte Drehmoment schnell und genau einstellbar ist, was zu einer verbesserten Fahrdynamik und Fahrstabilität führt. Außerdem wird durch die axial ineinandergreifende Konstruktion der beiden Zwischenplatten ein kurzer axialer Bauraum erreicht, was sich günstig auf das Gewicht der Baueinheit auswirkt.

Nach einer Ausführungsform hat die erste Zwischenplatte eine erste Anlagefläche, die axial vom ersten Lamellenpaket weg weist und die gegen das Kupplungseingangsteil in einer ersten Richtung axial abgestützt ist, und die zweite Zwischenplatte hat eine zweite Anlagefläche, die axial vom zweiten Lamellenpaket weg weist und die gegen das Kupplungseingangsteil in einer entgegengesetzten zweiten Richtung axial abgestützt ist. Die erste Anlagefläche und die zweite Anlagefläche sind axial versetzt zueinander angeordnet, und zwar insbesondere in Richtung zum jeweils gegenüberliegenden Lamellenpaket. In weiterer Konkretisierung kann vorgesehen sein, dass die erste Zwischenplatte erste Abschnitte und die zweite Zwischenplatte zweite Abschnitte aufweisen, die sich derart axial ineinander erstrecken, dass die erste Zwischenplatte und die zweite Zwischenplatte jeweils außerhalb eines Kraftflusses von der jeweils anderen der ersten und zweiten Zwischenplatte zum Kupplungseingangsteil angeordnet sind.

Die erste Zwischenplatte kann einen ersten Ringabschnitt aufweisen, gegen den das erste Lamellenpaket axial abgestützt ist, und die zweite Zwischenplatte kann einen zweiten Ringabschnitt aufweisen, gegen den das zweite Lamellenpaket axial abgestützt ist, wobei die beiden Ringabschnitte voneinander axial beabstandet sind. Die axiale Abstützung vom Lamellenpaket auf die jeweilige Zwischenplatte kann direkt erfolgen, das heißt über eine letzte Außen- oder Innenlamelle des jeweiligen Lamellenpakets, oder mittelbar, insbesondere über eine zwischengeschaltete Druckplatte. Der radiale Abstand zwischen den Zwischenplatten ist insbesondere mindestens so bemessen, dass auch bei maximaler elastischer Verformung der beiden Zwischenplatten aufgrund von axialen Betätigungskräften diese nicht miteinander in Kontakt kommen. Dadurch ist sichergestellt, dass auch bei Betätigung der Kupplungen keinerlei Axialkräfte zwischen den beiden Zwischenplatten wirksam sind, welche zu einer Abweichung des jeweils gewünschten Kupplungsmoments führen könnten.

Nach einer bevorzugten Ausführungsform weist die erste Zwischenplatte eine Mehrzahl von über den Umfang verteilten ersten Stützabschnitten auf, mit denen die erste Zwischenplatte gegen das Kupplungseingangsteil axial abgestützt ist, und, die zweite Zwischenplatte weist eine Mehrzahl von über den Umfang verteilten zweiten Stützabschnitten auf, mit denen die zweite Zwischenplatte gegen das Kupplungseingangsteil axial abgestützt ist. Die ersten und zweiten Stützabschnitte, die auch als Stützsegmente bezeichnet werden können, sind in Umfangsrichtung versetzt und/oder mit axialer Überdeckung zueinander angeordnet.

Zwischen den über den Umfang verteilten ersten Stützabschnitten können jeweils erste Ausnehmungen gebildet sein, in welche sich die zweiten Stützabschnitte axial hineinerstrecken. Entsprechend können zwischen den über den Umfang verteilten zweiten Stützabschnitten jeweils zweite Ausnehmungen gebildet sein, in welche sich die ersten Stützabschnitte axial hineinerstrecken. Durch diese Ausgestaltung wird ein axial verschachtelter Aufbau der beiden Zwischenplatten mit einer kurzen axialen Baulänge erreicht. Dabei kann die axiale Breite der einander axial überdeckenden ersten und zweiten Stützabschnitte insbesondere kleiner sein als die zusammengenommene axiale Breite der beiden Ringabschnitte.

Nach einer möglichen Konkretisierung kann eine Umfangserstreckung der ersten Stützabschnitte kleiner als eine Umfangserstreckung der zwischen den zweiten Stützabschnitten liegenden zweiten Ausnehmungen gestaltet sein. Entsprechend kann eine Umfangserstreckung der zweiten Stützabschnitte kleiner als eine Umfangserstreckung der zwischen den ersten Stützabschnitten liegenden ersten Ausnehmungen gestaltet sein.

Die Anzahl der über den Umfang verteilten Stützabschnitte und die entsprechende Anzahl der umfangsverteilten Ausnehmungen sind prinzipiell beliebig wählbar. Beispielsweise können sind zwei, drei, vier, fünf, sechs oder mehr umfangsverteilte Stützabschnitte vorgesehen sein, die insbesondere regelmäßig über den Umfang verteilt angeordnet sein können. Die Umfangserstreckung und Umfangsverteilung der Stützabschnitte kann in günstiger Weise so ausgelegt werden, dass eine sichere axiale Abstützung bei minimaler elastischer Verformbarkeit und möglichst geringem Materialeinsatz gegeben ist.

Zwischen dem ersten Ringabschnitt und den ersten Stützabschnitten können jeweils gekröpfte erste Übergangsabschnitte gebildet sein, die sich axial in Richtung zum zweiten Lamellenpaket (erste Richtung) erstrecken. Entsprechend können zwischen dem zweiten Ringabschnitt und den zweiten Stützabschnitten jeweils gekröpfte zweite Übergangsabschnitte gebildet sein, die sich axial in Richtung zum ersten Lamellenpaket (zweite Richtung) erstrecken.

Nach einer Ausführungsform können die ersten Stützabschnitte und die zweiten Stützabschnitte mit dem Kupplungseingangsteil drehfest verbunden werden, insbesondere mittels formschlüssiger Eingriffsmittel. Vorzugsweise hat das Kupplungseingangsteil eine längliche Verzahnungsstruktur, mit der die zugehörigen Eingangslamellen der ersten und zweiten Kupplung sowie die ersten und zweiten Stützabschnitte mit hierzu passenden Verzahnungen drehfest verbunden sind.

Die ineinander verschachtelten ersten und zweiten Stützabschnitte der beiden Zwischenplatten sind insbesondere mittels zweier Sicherungsringe am Kupplungseingangsteil axial fixiert. Für einen kompakten Aufbau ist es günstig, wenn die zwei Sicherungsringe innerhalb der axialen Erstreckung der ersten und zweiten Zwischenplatte liegen.

Im Hinblick auf eine günstige Fertigung und Montage sind die beiden Zwischenplatten vorzugsweise gleich gestaltet.

Nach einer möglichen Ausführungsform sind ein erster Aktuator zum Beaufschlagen des ersten Lamellenpakets und ein zweiter Aktuator zum Beaufschlagen des zweiten Lamellenpakets vorgesehen, wobei die beiden Aktuatoren unabhängig voneinander mittels einer Steuereinheit steuerbar sind, so dass ein vom ersten Lamellenpaket auf die erste Kupplungsnabe übertragbares erstes Drehmoment und ein vom zweiten Lamellenpaket auf die zweite Kupplungsnabe übertragbares zweite Drehmoment unabhängig voneinander variabel einstellbar sind.

Das Kupplungseingangsteil kann nach einer Ausführungsform als Kupplungskorb gestaltet sein, der in einem ortsfesten Gehäuse drehbar gelagert ist und der einen Aufnahmeraum bildet, in dem das erste Lamellenpaket, die erste Zwischenplatte, die zweite Zwischenplatte und das zweite Lamellenpaket aufgenommen sind. In einer konkreten Ausgestaltung kann der Kupplungskorb zwei Deckelabschnitte aufweisen, die einen Aufnahmeraum des Kupplungskorbs seitlich begrenzen, wobei die beiden Aktuatoren jeweils außerhalb des Kupplungskorbs angeordnet und gegen das Gehäuse abgestützt sein können. Zur Übertragung der von den Aktuatoren erzeugten Kräfte auf das zugehörige Lamellenpaket kann jeweils ein Kraftübertragungsglied vorgesehen sein, wobei der jeweilige Deckelabschnitt mehrere umfangsverteilte Durchtrittsöffnungen aufweist, durch die sich Nocken des zugehörigen Kraftübertragungsglieds hindurch erstrecken.

Eine Lösung der oben genannten Aufgabe ist weiter ein Elektroantrieb zum Antreiben einer Antriebsachse eines Kraftfahrzeugs, umfassend: eine elektrische Maschine mit einer Motorwelle; eine Getriebeeinheit, die ausgestaltet ist, um eine von der elektrischen Maschine eingeleitete Drehbewegung vom Schnellen ins Langsame zu übersetzen; und eine Doppelkupplungseinheit nach einer der oben genannten Ausführungsformen, wobei das Kupplungseingangsteil von einem Ausgangsrad der Getriebeeinheit drehend antreibbar ist.

Dabei trägt die Doppelkupplungseinheit in vorteilhafter Weise zu einer schnellen und präzisen Einstellung des gewünschten Drehmoments an der jeweiligen Ausgangswelle bei, was sich günstig auf die Fahrdynamik beziehungsweise Fahrstabilität auswirkt. Außerdem trägt die axial ineinandergreifende Konstruktion der beiden Zwischenplatten zu einer kurzen axialen Baulänge der gesamten Elektroantriebsanordnung bei.

Nach einer möglichen Ausführungsform kann die elektrische Maschine in koaxialer Anordnung zur Doppelkupplungseinheit angeordnet sein. Hierfür ist insbesondere vorgesehen, dass die Motorwelle als Hohlwelle ausgebildet ist, die in einem ortsfesten Gehäuse um eine Drehachse drehbar gelagert ist, wobei das Kupplungseingangsteil koaxial zur Drehachse der Motorwelle drehbar gelagert ist, dass die Getriebeeinheit eine Getriebewelle aufweist, die von der Motorwelle drehend antreibbar ist und um eine zur Motor-Drehachse parallele Drehachse in dem Gehäuse drehbar gelagert ist, und dass das erste Kupplungsausgangsteil zum Antreiben einer ersten Ausgangswelle und das zweite Kupplungsausgangsteil zum Antreiben einer zweiten Ausgangswelle ausgestaltet sind, wobei eine der beiden Ausgangswellen sich durch die Hohlwelle der elektrischen Maschine hindurch erstreckt. Insgesamt ist diese Konstruktion besonders kompakt.

Bevorzugte Ausführungsbeispiele werden nachstehend anhand der Zeichnungsfiguren erläutert. Hierin zeigt:
- Figur 1: eine erfindungsgemäße Doppelkupplungseinheit in einer ersten Ausführungsform im Längsschnitt;
- Figur 2: ein Detail der Doppelkupplungseinheit aus Figur 1 in vergrößerter Darstellung;
- Figur 3: die Zwischenplattenanordnung aus Figur 1 als perspektivische Explosionsdarstellung;
- Figur 4: die Zwischenplattenanordnung aus Figur 1 in zusammengesetztem Zustand als perspektivische Darstellung;
- Figur 5: eine Zwischenplattenanordnung für eine erfindungsgemäße Doppelkupplungseinheit in einer weiteren Ausführungsform als perspektivische Explosionsdarstellung;
- Figur 6: die Zwischenplattenanordnung aus Figur 5 in zusammengesetztem Zustand als perspektivische Darstellung;
- Figur 7: die Zwischenplattenanordnung aus Figur 5 als perspektivische Explosionsdarstellung mit Sicherungsringen;
- Figur 8: die Anordnung aus Figur 7 in zusammengesetztem Zustand als perspektivische Darstellung;
- Figur 9: die Anordnung aus Figur 7 in zusammengesetztem Zustand im Halblängsschnitt;
- Figur 10: eine erfindungsgemäße Antriebsanordnung mit einer erfindungsgemäßen Doppelkupplungseinheit aus Figur 1 im Längsschnitt.

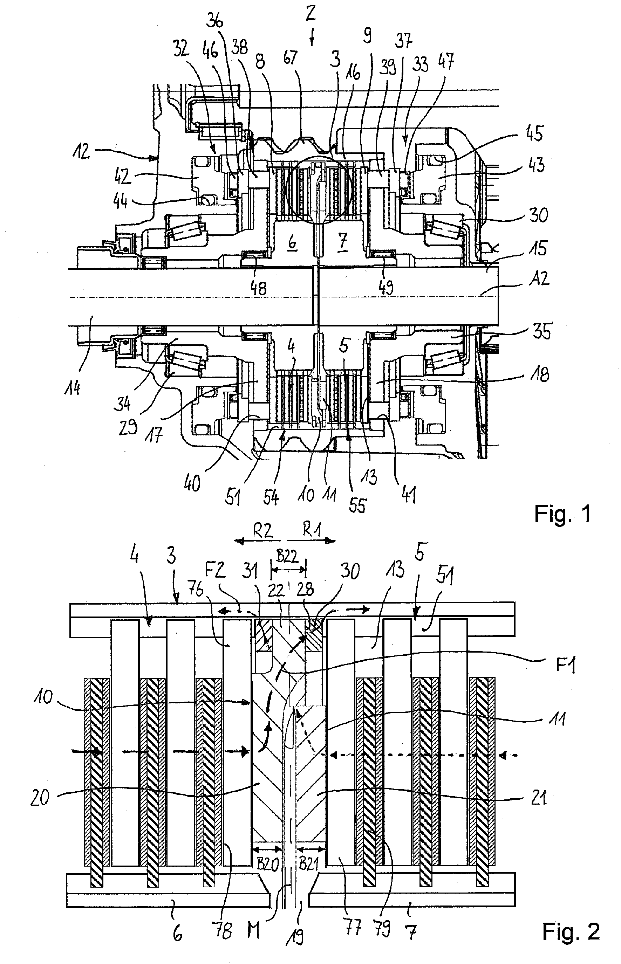

Die Figuren 1 bis 4, welche nachstehend gemeinsam beschrieben werden, zeigen eine erfindungsgemäße Doppelkupplungseinheit 2, die auch als Kupplungsanordnung bezeichnet werden kann. Die Doppelkupplungseinheit 2 dient insbesondere zum Einsatz im Antriebsstrang eines Kraftfahrzeuges zur variablen Drehmomentverteilung von einem Eingangsteil 3 auf zwei Ausgangsteile 6, 7. Hierfür hat die Doppelkupplungseinheit 2 zwei separat steuerbare Reibungskupplungen 54, 55, deren übertragbares Drehmoment individuell variabel einstellbar ist.

Damit eignet sich die Doppelkupplungseinheit 2 zur aktiven Steuerung der Gierbewegung des Kraftfahrzeugs beziehungsweise der Gierwinkelgeschwindigkeit. Dies wird dadurch bewerkstelligt, dass die auf die linke und rechte Seitenwelle einer angetriebenen Achse unterschiedlich verteilt beziehungsweise gezielt eingestellt werden. Derartige Systeme zur variablen Drehmomentverteilung werden auch als "Torque Vectoring"-Systeme oder "Active Yaw"-Systeme bezeichnet. Das Steuerungsprinzip wird auch als aktive Momentenverteilung oder "Torque Vectoring" bezeichnet.

Die Doppelkupplungseinheit 2 weist ein um eine Drehachse A2 drehend antreibbares Eingangsteil 3, zwei Lamellenpakete 4, 5 und zwei Ausgangsteile 6, 7 auf. Das erste Lamellenpaket 4 dient zur variablen Drehmomentübertragung vom Kupplungseingangsteil 3 auf das erste Ausgangsteil 6, während das zweite Lamellenpaket 5 zur variablen Drehmomentübertragung vom Kupplungseingangsteil 3 auf das zweite Ausgangsteil 7 dient. Die beiden Lamellenpakete 4, 5 sind individuell mit Kraft beaufschlagbar, so dass das auf die jeweilige Seitenwelle zu übertragende Drehmoment nach Bedarf genau eingestellt werden kann. Die beiden Lamellenpakete 4, 5 sind jeweils von einer zugehörigen Druckplatte 8, 9 axial in Richtung aufeinander zu beaufschlagbar und jeweils gegen ein zugehöriges Stützelement 10, 11 axial abgestützt. Die beiden Stützelemente 10, 11, welche entsprechend axial zwischen den beiden Lamellenpakten 4, 5 angeordnet sind, sind wiederum gegen das Kupplungseingangsteil 3 axial abgestützt. Es ist insbesondere in den Figuren 2 bis 4 erkennbar, dass die beiden Stützelemente 10, 11 axial ineinandergreifend gestaltet sind, so dass sie sich unabhängig voneinander gegen das Kupplungseingangsteil 3 axial abstützen. Die Stützelemente 10, 11 werden auch als Zwischenplatten bezeichnet; sie sind funktional zwischen dem jeweils zugehörigen Lamellenpaket 4, 5 zur Kraftübertragung in das Eingangsteil 3 angeordnet.

Das Kupplungseingangsteil 3 ist vorliegend als Kupplungskorb gestaltet, der in einem ortsfesten Gehäuse 12 drehbar gelagert ist, und die Ausgangsteile 6, 7 sind jeweils als Kupplungsnaben gestaltet sind. Es versteht sich jedoch, dass prinzipiell auch eine umgekehrte Ausgestaltung möglich ist, das heißt, dass das Eingangsteil als Kupplungsnabe und die Ausgangsteile als Kupplungskörbe gestaltet sind.

Der Kupplungskorb 3 bildet vorliegend einen Aufnahmeraum 13, in dem das erste Lamellenpaket 4, die erste Zwischenplatte 10, die zweite Zwischenplatte 11 und das zweite Lamellenpaket 5 aufgenommen sind. Der Kupplungskorb 3 hat einen umlaufenden Mantelabschnitt 16 und zwei Deckelabschnitte 17, 18, die den Aufnahmeraum seitlich begrenzen. Die Lamellenpakete 4, 5 umfassen jeweils mehrere mit dem Kupplungskorb 3 drehfest und axial bewegliche Außenlamellen sowie mehrere mit der zugehörigen Kupplungsnabe 6, 7 drehfest und axial bewegliche Innenlamellen, die axial abwechselnd angeordnet sind. Die beiden Kupplungen 54, 55 sind hinsichtlich ihres Aufbaus, insbesondere ihrer geometrischen Abmessungen wie Nabenaußendurchmesser, Nabeninnendurchmesser, Durchmesser der Außen- und Innenlamellen, vorzugsweise gleich gestaltet. Die erste Kupplungsnabe 6 ist mit einer ersten Ausgangswelle 14 antriebsmäßig verbunden und die zweite Kupplungsnabe 7 mit einer zweiten Ausgangswelle 15.

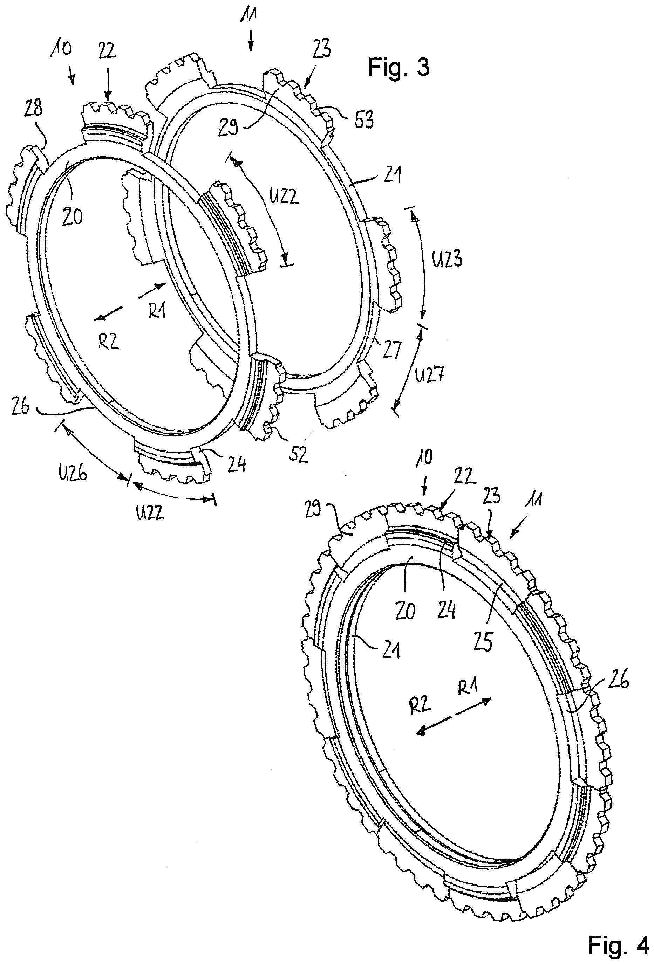

Wie insbesondere aus den Figuren 3 und 4 hervorgeht, weisen die beiden Zwischenplatten 10, 11 jeweils einen Ringabschnitt 20, 21 zum axialen Abstützen des jeweils zugehörigen Lamellenpakets 4, 5 sowie eine Mehrzahl von über den Umfang verteilten Stützabschnitten 22, 23 zum Verbinden mit dem Eingangsteil 3 auf. Eine bei Betätigung des ersten Lamellenpakets 4 wirksame axiale Betätigungskraft F1 wird vom Lamellenpaket 4 in den ersten Ringabschnitt 20 eingeleitet und über die ersten Stützabschnitte 22 gegen das Eingangsteil 3 axial abgestützt. Entsprechend wird eine bei Betätigung des zweiten Lamellenpakets 5 wirksame axiale Betätigungskraft F2 vom Lamellenpaket 5 in den Ringabschnitt 21 der zweiten Zwischenplatte 11 eingeleitet und über die zugehörigen zweiten Stützabschnitte 23 gegen das Eingangsteil 3 in der entgegengesetzten zweiten Richtung R2 axial abgestützt. Zwischen den beiden Ringabschnitten 20, 21 ist ein axialer Spalt 19 gebildet, so dass sie auch bei elastischer Verformung aufgrund von axialen Betätigungskräften F1, F2 nicht miteinander in Kontakt kommen. Im Hinblick auf eine günstige Fertigung und Montage sind die beiden Zwischenplatten 10, 11 gleich gestaltet. Vorliegend sind die benachbart zur Mittelebene M liegenden Außenlamellen 76, 77 mit der jeweils zugehörigen Zwischenplatte 10, 11 in Anlage und gegen diese axial abgestützt. Je nach Dicke der Lamellen kann optional zwischen der jeweils letzten Außenlamelle 76, 77 noch jeweils eine Stützplatte mit größerer Dicke vorgesehen sein. Ebenso ist es denkbar, dass die letzten Außenlamellen 76, 77 entfallen, das heißt, dass die letzten Innenlamellen 78, 79 direkt mit der jeweils zugehörigen Zwischenplatte 10, 11 in Anlage und gegen diese axial abgestützt sind, oder indirekt unter Zwischenschaltung einer optionalen Stützplatte.

Die ersten Stützsegmente 22 erstrecken sich vom ersten Ringabschnitt 20 nach radial außen und sind gegenüber diesem in axiale Richtung versetzt, wobei zwischen dem Ringabschnitt 20 und den Stützsegmenten 22 gekröpfte Übergangsabschnitte 24 gebildet sind. Die zweite Zwischenplatte 11 ist analog gestaltet, das heißt die zweiten Stützsegmente 23 erstrecken sich vom zweiten Ringabschnitt 21 nach radial außen und sind gegenüber diesem in axiale Richtung zur Mittelebene M versetzt, wobei zwischen dem Ringabschnitt 21 und den Stützsegmenten 23 gekröpfte Übergangsabschnitte 25 gebildet sind.

Die ersten und zweiten Stützabschnitte 22, 23 sind in Umfangsrichtung versetzt zueinander und in axialer Richtung einander überdeckend angeordnet. Insbesondere erstrecken sich die ersten und zweiten Stützabschnitte 22, 23 derart axial ineinander, dass die beiden Zwischenplatten 10, 11 jeweils außerhalb des Kraftflusses der jeweils anderen Zwischenplatte (11, 10) zum Kupplungseingangsteil liegen. Zwischen den in Umfangsrichtung benachbarten Stützabschnitten 22, 23 der beiden Zwischenplatten 10, 11 sind jeweils Ausnehmungen 26, 27 gebildet, in welche sich die Stützabschnitte 23, 22 der jeweils anderen Zwischenplatte 11, 10 axial hineinerstrecken. Dabei liegen die Stützabschnitte 22 der ersten Zwischenplatte 10 und die Stützabschnitte 23 der zweiten Zwischenplatte 11 in einer Ebene, und zwar vorliegend einer zwischen den beiden Lamellenpaketen gebildeten Mittelebene M. Die beiden Zwischenplatten 4, 5 greifen mit ihren außen liegenden Stützabschnitten 22, 23 axial ineinander, so dass ein verschachtelter Aufbau der beiden Zwischenplatten mit einer kurzen axialen Baulänge erreicht wird. Dabei ist die axiale Breite B20 der einander axial überdeckenden ersten und zweiten Stützabschnitte 22, 23 insbesondere kleiner ist als die Summe der axialen Breite B20, B21 der beiden Ringabschnitte 20, 21.

Die Anzahl der über den Umfang verteilten Stützabschnitte 22, 23 und die entsprechende Anzahl der umfangsverteilten Ausnehmungen 26, 27 beträgt bei der Ausführungsform gemäß den Figuren 3 und 4 sechs. Die Stützabschnitte 22, 23 beziehungsweise Ausnehmungen 26, 27 sind regelmäßig über den Umfang verteilt angeordnet, wobei die Umfangserstreckung U22, U23 der Stützabschnitte 22, 23 etwa der Umfangserstreckung U26, U27 der dazwischenliegenden Ausnehmungen 26, 27 entspricht. Die Stützabschnitte 22, 23 und gegenüberliegenden Ausnehmungen 27, 26 sind so gestaltet, das in axial ineinander eingesetztem Zustand Spiel zwischen den beiden Zwischenplatten vorgesehen ist, damit diese axial kraftfrei ineinander liegen. Es versteht sich, dass auch eine andere Zahl von Stützabschnitten 22, 23 verwendet werden kann und, dass diese auch kürzer sein können als die jeweils gegenüberliegenden Ausnehmungen 27, 26.

Die erste Zwischenplatte 10 ist über die ersten Stützsegmente 22 in einer ersten axialen Richtung R1 gegen das Kupplungseingangsteil 3 axial abgestützt und die zweite Zwischenplatte 11 ist über die zweiten Stützsegmente 23 in einer entgegengesetzten zweiten Richtung R2 gegen das Kupplungseingangsteil axial abgestützt. Konkret haben die ersten Stützsegmente 22 jeweils eine erste Anlagefläche 28, die axial vom ersten Lamellenpaket 4 weg weisen und die gegen das Kupplungseingangsteil 3 axial abgestützt sind. Entsprechend haben die zweiten Stützsegmente 23 jeweils eine zweite Anlagefläche 29, die axial vom zweiten Lamellenpaket 5 weg weisen und in der entgegengesetzten Richtung gegen das Kupplungseingangsteil axial abgestützt sind. Die ersten Anlageflächen 28 und die zweiten Anlageflächen 29 sind axial versetzt zueinander angeordnet, und zwar in Richtung zum jeweils gegenüberliegenden Lamellenpaket.

Die axiale Abstützung erfolgt über zwei Sicherungsringe 30, 31, von denen der erste Sicherungsring 30 in der ersten Richtung R1 gegenüber der Mittelebene M versetzt ist und eine axiale Abstützung für die erste Zwischenplatte 4 bildet und, von denen der zweite Sicherungsring 31 in der zweiten Richtung R2 gegenüber der Mittelebene M versetzt ist und eine axiale Abstützung für die zweite Zwischenplatte 5 bildet. Es ist insbesondere in Figur 2 erkennbar, dass die beiden Sicherungsringe 30, 31 innerhalb der axialen Erstreckung der beiden Zwischenplatten 4, 5 liegen, so dass die aus den Zwischenplatten 4, 5 und Sicherungsringen 30, 31 gebildete Stützanordnung eine minimale axiale Erstreckung aufweist.

Die ersten und zweiten Stützsegmente 22, 23 sind mit dem Kupplungskorb 3 drehfest verbunden. Hierfür haben die Stützsegmente 22, 23 an ihrer Außenumfangsfläche Eingriffsmittel 52, 53, die in entsprechende gegengleiche Eingriffsmittel 51 an der Innenumfangsfläche des Kupplungskorbs 3, beziehungsweise des Zylinderabschnitts 16 des Korbs drehfest eingreifen. Die Eingriffsmittel 51 des Kupplungseingangsteils 3 sind insbesondere als längliche Verzahnungsstruktur gestaltet, mit welcher auch die Außenlamellen der beiden Lamellenpakete 4, 5 drehfest und axial beweglich in Eingriff sind. Die äußeren Eingriffsmittel 52, 53 der Stützsegmente 22, 23 sind hierzu passend gestaltet, so dass die Zwischenplatten 10, 11 durch eine axiale Fügebewegung in den Kupplungskorb 3 eingesetzt und mittels der Sicherungsringe 30, 31 axial fixiert werden. Anschließend werden die Lamellenpakete 4, 5 in den Kupplungskorb 3 eingesetzt.

Der Kupplungskorb 3 ist vorliegend dreiteilig aufgebaut, wobei der Zylinderabschnitt 16 und die Deckelabschnitte 17, 18 als separate Bauteile hergestellt und nachträglich miteinander verbunden werden können, insbesondere mittels Schweißen. Die Deckelabschnitte 17, 18 haben jeweils einen einstückig angeformten Hülsenansatz 34, 35 zur Aufnahme eines zugehörigen Kupplungslagers, mit denen der Kupplungskorb 3 im Gehäuse 12 drehbar gelagert ist. Der Kupplungskorb 3 hat an seiner Außenumfangsfläche ein Ringrad 67 zur Einleitung eines Drehmoments, das insbesondere einteilig mit dem Kupplungskorb 3 gestaltet sein kann. Das Ringrad 67 wird von einem Abtriebsrad einer hier nicht näher dargestellten Getriebeeinheit angetrieben, wobei die beiden Räder vorzugsweise Schrägverzahnungen aufweisen.

Jede der beiden Kupplungen 54, 55 ist von einem zugehörigen Aktuator 32, 33 individuell betätigbar. Hierfür sind die beiden Aktuatoren 32, 33 unabhängig voneinander mittels einer Steuereinheit (nicht dargestellt) steuerbar, so dass ein vom ersten Lamellenpaket 4 auf die erste Kupplungsnabe 6 übertragbares erstes Drehmoment und ein vom zweiten Lamellenpaket 5 auf die zweite Kupplungsnabe 24 übertragbares zweite Drehmoment unabhängig voneinander variabel einstellbar sind. Die beiden Aktuatoren 32, 33 sind hinsichtlich ihres Aufbaus und Funktionsweise gleich gestaltet, weswegen nachstehend beide gemeinsam beschrieben werden. Alle für einen Aktuator beschriebenen Merkmale gelten entsprechend auch für den anderen Aktuator. Die beiden Aktuatoren 32, 33 sind jeweils außerhalb des Kupplungskorbs 3 angeordnet und am Gehäuse 12 in entgegengesetzte axiale Richtungen axial abgestützt.

Je Kupplung ist ein Kraftübertragungsglied 36, 37 vorgesehen ist, um eine vom Aktuator erzeugte Axialkraft auf das im Kupplungskorb 3 angeordnete zugehörige Lamellenpaket 4, 5 zu übertragen. Die Kraftübertragungsglieder 36, 37 umfassen einen scheibenförmigen Grundkörper, von dem mehrere Nocken 38, 39 in axiale Richtung abstehen, die auch als Vorsprünge bezeichnet werden können. Die beiden Deckelabschnitte 17, 18 haben jeweils mehrere umfangsverteilte axiale Durchtrittsöffnungen 40, 41, durch die sich Nocken 38, 39 des zugehörigen Kraftübertragungsglieds 36, 37 hindurch erstrecken. Die Nocken 38, 39 sind jeweils mit dem zugehörigen scheibenförmigen Grundkörper fest verbunden, insbesondere einteilig mit diesem gestaltet, beispielsweise mittels eines Umformverfahrens. Die Kraftübertragungsglieder 36, 37 sind über die in die Öffnungen der Deckelteile eingreifenden Nocken 38, 39 drehfest mit dem Kupplungskorb 3 verbunden, so dass sie gemeinsam mit diesem um die Drehachse A2 rotieren. Gleichzeitig sind die Kraftübertragungsglieder 36, 37 gegenüber dem Kupplungskorb 3 axial beweglich, um eine axiale Stellkraft der außerhalb des Kupplungskorbs 3 liegenden Aktuatoren 32, 33 auf die in dem Kupplungskorb 3 angeordneten Lamellenpakete 4, 5 zu übertragen. Die Nocken 38, 39 wirken jeweils auf die im Kupplungskorb 3 angeordnete Druckplatte 8, 9 ein, welche die Kraft auf das jeweilige Lamellenpaket 4, 5 überträgt. Axial innen sind die Lamellenpakete 4, 5 jeweils über die Stützplatten 76, 77 und die Zwischenplatten 10, 11 gegen die mit dem Kupplungskorb 3 verbundenen zugehörigen Sicherungsringe 30, 31 axial abgestützt.

Die Aktuatoren 32, 33 sind vorliegend als hydraulisch betätigbare Aktuatoren gestaltet und umfassen jeweils einen ringförmigen Kolben 42, 43, der in einer zugehörigen ringförmigen Zylinderkammer 44, 45 der Gehäuseanordnung 12 axial verschiebbar einsitzt. Über hier nicht dargestellte Ölkanäle kann mittels einer Hydraulikpumpe in der Hydraulikkammer 44, 45 ein hydraulischer Druck erzeugt werden, so dass der hierin einsitzende Kolben 42, 43 axial in Richtung Kupplungskorb 3 bewegt wird. Axialkraft wird über ein Axiallager 46, 47 auf das jeweilige Kraftübertragungsglied 36, 37 übertragen. Die Axiallager 46, 47 dienen zur drehmäßigen Entkopplung der mit dem Kupplungskorb 3 rotierenden Kraftübertragungsglieder 36, 37 gegenüber den ortsfest im Gehäuse 12 angeordneten Aktuatoren beziehungsweise Kolben 42, 43. Zur Rückstellung der Aktuatoren 32, 33 können hier nicht dargestellte Rückstellfedern vorgesehen sein. Diese können beispielsweise zwischen dem Kupplungskorb 3 und dem zugehörigen Kraftübertragungsglied 36, 37 angeordnet sind, um dieses bei unbetätigtem Aktuator von dem Kupplungskorb 3 axial weg zu beaufschlagen.

Die Aktuatoren 32, 33 sind radial außerhalb der beiden Kupplungslager 29, 30 angeordnet. Das heißt, ein Außendurchmesser des ersten beziehungsweise zweiten Kupplungslagers 29, 30 ist kleiner ein Innendurchmesser des ersten beziehungsweise zweiten Aktuators 32, 33. Die beiden Lager 29, 30 sind insbesondere als Kegelrollenlager gestaltet, so dass sie Axialkräfte gut abstützen und in das Gehäuse 12 einleiten können. Die auf die Lamellenpakete 4, 5 einwirkenden Kraftübertragungsglieder 38, 39 liegen zumindest größtenteils radial außerhalb eines mittleren Durchmessers der Lamellenpakete 4, 5. Es ist ferner vorgesehen, dass das erste Kupplungslager 29 zumindest teilweise eine axiale Überdeckung mit dem ersten Aktuator 32 hat beziehungsweise, dass das zweite Kupplungslager 30 zumindest teilweise eine axiale Überdeckung mit dem zweiten Aktuator 33 hat.

Die erste Kupplungsnabe 6 ist mit der ersten Ausgangswelle 14 drehfest verbunden, die eingeleitetes Drehmoment über ein Gleichlaufgelenk auf eine erste Seitenwelle (nicht dargestellt) übertragen kann. Die zweite Kupplungsnabe 24 ist mit der zweiten Ausgangswelle 15 drehfest verbunden. Die beiden Kupplungsnaben 6, 7 sind axial gegeneinander und gegenüber dem Kupplungskorb 3 abgestützt. Die Kupplungsnaben 6, 7 sind mittels Lagern 48, 49 gegenüber dem Kupplungskorb 3 um die Drehachse A2 drehbar gelagert. Hierfür haben die Kupplungsnaben 6, 7 jeweils einen nach axial außen abstehenden Hülsenansatz. Zwischen einer Außenfläche des Hülsenansatzes und einer Innenfläche des jeweiligen Deckelteils 17, 18 sitzt jeweils eines der Lager 48, 49 ein.

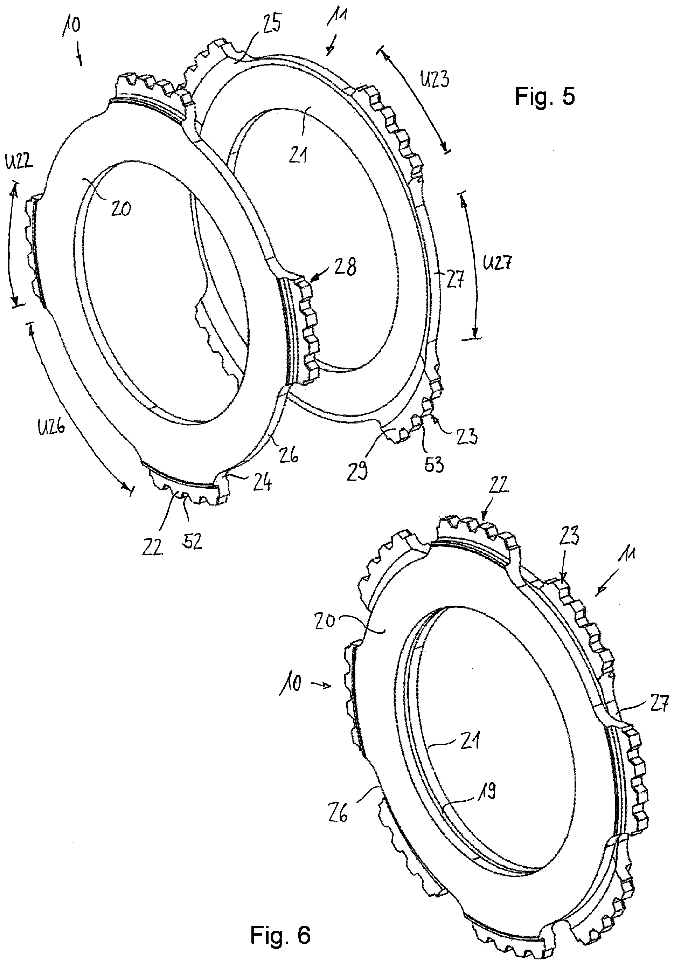

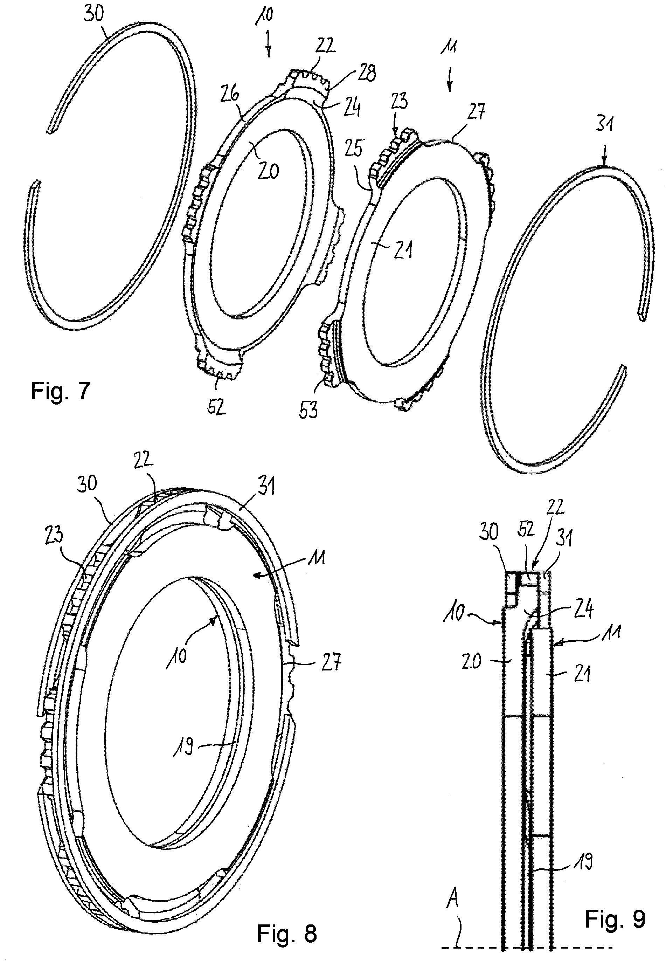

Die Figuren 5 bis 9, welche nachstehend gemeinsam beschrieben werden, zeigen eine erfindungsgemäße Anordnung für eine erfindungsgemäße Doppelkupplungseinheit 2 in einer abgewandelten Ausführungsform. Diese Anordnung entspricht weitestgehend der Zwischenplattenanordnung gemäß den Figuren 2 bis 4, so dass hinsichtlich der Gemeinsamkeiten auf die obigen Beschreibungen Bezug genommen wird. Dabei sind in den Figuren 7 bis 9 zusätzlich die Sicherungsringe 30, 31 gezeigt. Es sind gleiche beziehungsweise einander entsprechende Einzelheiten mit gleichen Bezugsziffern versehen, wie bei den obigen Figuren.

Ein Unterschied besteht darin, dass die Anzahl der umfangsverteilten Stützabschnitte 22 beziehungsweise Ausnehmungen 26 der ersten Zwischenplatte 10 und entsprechend die Anzahl der Stützabschnitte 23 der zweiten Zwischenplatte 11 vier beträgt. Wie bei der obigen Ausführungsform greifen die Stützabschnitte 22 der ersten Zwischenplatte 10 in die Ausnehmungen 27 der zweiten Zwischenplatte 11 axial ein, und umgekehrt. Es ist insbesondere in den Figuren 5 und 6 erkennbar, dass die Umfangserstreckung U22 der ersten Stützabschnitte 22 kleiner ist als eine Umfangserstreckung U27 der zwischen den zweiten Stützabschnitten 23 liegenden zweiten Ausnehmungen 27, und umgekehrt. Die beiden Zwischenplatten 10, 11 sind untereinander gleich gestaltet und zueinander in Umfangsrichtung versetzt axial ineinander montiert. In axial aneinander angenähertem Montagezustand, wie in den Figuren 6, 8 und 9 gezeigt, liegen die ersten und zweiten Stützabschnitt 22, 23 in axialer Überdeckung miteinander und die Ringabschnitte 20, 21 sind voneinander durch den Axialspalt 19 axial beabstandet. Im Übrigen entsprechen Aufbau und Funktionsweise der obigen Ausführungsform, auf deren Beschreibung hier abkürzend verwiesen wird.

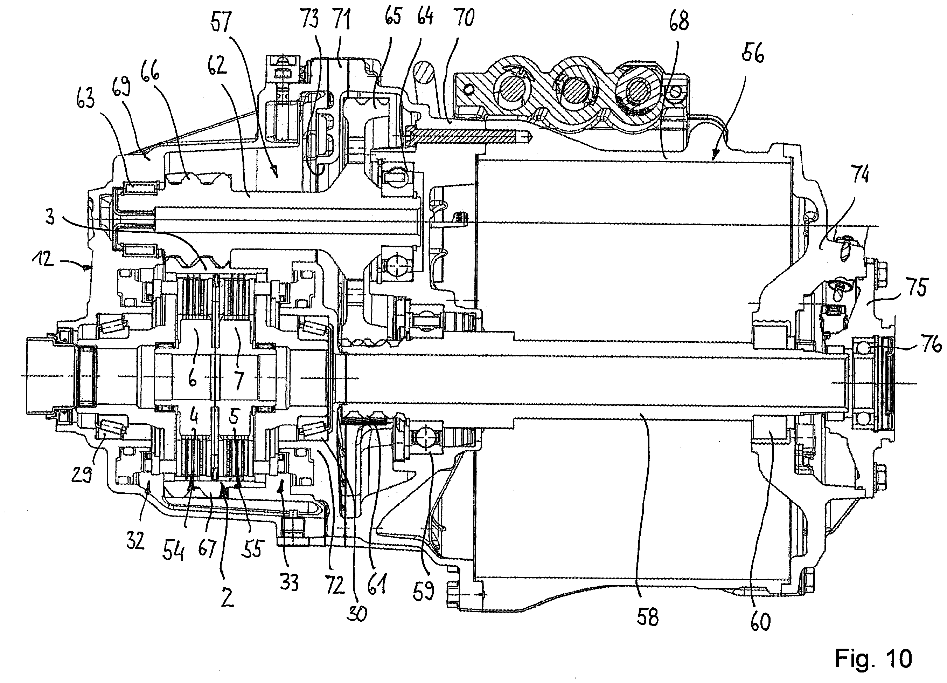

Die Figur 10 zeigt einen erfindungsgemäßen Elektroantrieb 50 mit einer elektrischen Maschine 56 und einer von der elektrischen Maschine drehend antreibbaren Getriebeeinheit 57 und ein von der Getriebeeinheit drehend antreibbare Doppelkupplungseinheit 2 mit zwei separat steuerbaren Reibungskupplungen 54, 55, die jeweils von einem zugehörigen Aktuator 32, 33 betätigbar sind. Der Elektroantrieb 50 ist ausgestaltet, um eine Antriebsachse eines Kraftfahrzeugs als alleiniger Antrieb dieser Antriebsachse anzutreiben. Eine weitere Antriebsachse des Kraftfahrzeugs kann von einer weiteren Antriebseinheit mit separater Antriebsquelle, beispielsweise einem Verbrennungsmotor angetrieben werden. Es ist jedoch keine mechanische Antriebsverbindung zwischen den beiden Antriebssystemen vorgesehen.

Die elektrische Maschine 56 umfasst einen Stator und einen hierzu drehbaren Rotor, der bei Bestromen der elektrischen Maschine eine Motorwelle 58 drehend antreibt. Die Drehbewegung der Motorwelle 58 wird über das im Leistungspfad nachgelagerte Getriebeeinheit 57 auf die Doppelkupplungseinheit 2 übertragen. Es ist erkennbar, dass sich die zweite Ausgangswelle 15 der Kupplungseinheit 2 durch die Hohlwelle 58 der elektrischen Maschine 56 hindurch erstreckt. Die Doppelkupplungseinheit 2 ist koaxial zur elektrischen Maschine 56 angeordnet. Konkret ist der Kupplungskorb 3 mittels zweier Kupplungslager 29, 30 in der Gehäuseanordnung 12 koaxial zur Motorwelle 9 drehbar gelagert.

Die elektrische Maschine 56 wird von einer Batterie (nicht dargestellt) mit elektrischem Strom versorgt. Die elektrische Maschine 56 kann im Motorbetrieb arbeiten, wobei elektrische Energie in mechanische Energie zum Antrieben der Antriebsachse umgewandelt wird, oder im Generatorbetrieb, wobei, umgekehrt, mechanische Energie in elektrische Energie umgewandelt wird, die dann in der Batterie gespeichert werden kann. Der Elektroantrieb 50 umfasst ferner eine Gehäuseanordnung 12, in dem die elektrische Maschine 56, die Getriebeeinheit 57 und die Doppelkupplungseinheit 2 angeordnet sind.

Die Getriebeeinheit 57 ist in Form eines Untersetzungsgetriebes gestaltet, das eine von der Motorwelle 58 eingeleitete Drehbewegung vom Schnellen ins Langsame übersetzt. Somit dreht ein Eingangsteil der Doppelkupplungseinheit 2 um ein Vielfaches langsamer als die Motorwelle 58 der elektrischen Maschine 56. Die Doppelkupplungseinheit 2 teilt das eingeleitete Drehmoment auf die beiden Ausgangsteile 6, 7 auf, die zum Antreiben eines zugehörigen Fahrzeugrads dienen. Die Motorwelle 58 ist mittels Lager 59, 60 in der Gehäuseanordnung 12 des Elektroantriebs 50 um die Drehachse A58 drehbar gelagert. Ein Antriebsrad 61 (erstes Zahnrad) ist drehfest mit der Motorwelle 58 verbunden, insbesondere einteilig mit dieser gestaltet.

Das Untersetzungsgetriebe 57 umfasst eine Getriebewelle 62, die über Lager 63, 64 um eine zur ersten Drehachse A58 parallele zweite Drehachse A62 in der Gehäuseanordnung 12 drehbar gelagert ist und auch als Zwischenwelle bezeichnet werden kann. Die Getriebewelle 62 umfasst ein Antriebsrad 65 (zweites Zahnrad) und ein Abtriebsrad 66 (drittes Zahnrad), die drehfest mit der Getriebewelle verbunden sind, insbesondere einteilig mit dieser ausgestaltet sind. Das Abtriebsrad 66 kämmt mit dem Ringrad 67 (viertes Zahnrad) zum Antreiben der Doppelkupplungseinheit 2. Das Ringrad 67 ist fest mit dem Eingangsteil 3 der Doppelkupplungseinheit 2 verbunden, insbesondere einteilig mit diesem ausgestaltet. Das Abtriebsrad 66 der Getriebewelle 62 und das Ringrad 67 des Kupplungseingangsteils haben jeweils Schrägverzahnungen.

Es ist erkennbar, dass das Untersetzungsgetriebe 57 genau eine Getriebewelle 62 und zwei Zahnradpaarungen aufweist. Das Antriebsrad 61 der Motorwelle 58 und das hiermit kämmende Antriebsrad 65 der Getriebewelle 62 bilden eine erste Zahnradpaarung des Übersetzungsgetriebes 57 mit einem ersten Übersetzungsverhältnis. Das Abtriebsrad 66 der Getriebewelle 62 und das hiermit kämmende Ringrad 67 bilden eine zweite Zahnradpaarung. Das Motorwellen-Antriebsrad 61 hat einen wesentlich kleineren Durchmesser beziehungsweise eine geringere Zähnezahl als der Durchmesser beziehungsweise die Zähnezahl des Getriebewellen-Antriebsrads 65. Auf diese Weise wird eine Übersetzung ins Langsame erzeugt. Ebenso hat das Getriebewellen-Abtriebsrad 66 einen kleineren Durchmesser beziehungsweise eine geringere Zähnezahl als das Ringrad 67, so dass hier eine weitere Übersetzung ins Langsame erfolgt.

Die Gehäuseanordnung 12 aus mehreren einzelnen Gehäuseteilen zusammengesetzt und umfasst insbesondere einen ersten Gehäuseabschnitt 68, in dem der Elektromotor 56 aufgenommen ist, und einen zweiten Gehäuseabschnitt 69, in dem die Getriebeeinheit 57 aufgenommen ist, sowie eine erste Zwischenwand 70 und eine zweite Zwischenwand 71 auf, die zwischen dem ersten und zweiten Gehäuseabschnitt 68, 69 angeordnet und mit diesen fest verbunden sind. Die erste Zwischenwand 70 weist Lageraufnahmeabschnitte für das Lager 59 zur Lagerung der Hohlwelle 58 und für das Lager 64 zur Lagerung der Getriebewelle 62 auf. Axial zwischen der ersten Zwischenwand 70 und der zweiten Zwischenwand 71 ist ein Aufnahmeraum gebildet, in dem die Antriebsräder 61, 65 aufgenommen sind. Die zweite Zwischenwand 70 hat einen Lageraufnahmeabschnitt 72 für das Lager 49 zur drehbaren Lagerung des Kupplungskorbs 3, sowie eine Durchgangsöffnung 73, durch welche die Getriebewelle 62 hindurchgeführt ist.

Ein Vorteil der erfindungsgemäßen Doppelkupplungseinheit 2 und einer damit ausgestatteten Antriebsanordnung ist, dass eine Kraftübertragung vom ersten Lamellenpaket 4 über die erste Zwischenplatte 10 in das Kupplungseingangsteil 3 unabhängig von einer Kraftübertragung vom zweiten Lamellenpaket 5 über die zweite Zwischenplatte 11 in das Eingangsteil 3 erfolgt. Die in der ersten Richtung wirkenden Axialkräfte werden über die ersten Abschnitte 22, 24 der ersten Zwischenplatte an der zweiten Zwischenplatte 11 vorbei in das Kupplungseingangsteil 3 eingeleitet, und umgekehrt. Eine ungewünschte gegenseitige Beeinflussung der Kupplungskräfte wird ausgeschlossen, so dass die Kupplungen schnell und präzise steuerbar sind.

### Bezugszeichenliste

- 2: Doppelkupplungseinheit
- 3: Eingangsteil
- 4, 5: Lamellenpaket
- 6, 7: Ausgangsteil
- 8, 9: Druckplatte
- 10, 11: Zwischenplatte
- 12: Gehäuse
- 13: Aufnahmeraum
- 14, 15: Ausgangswelle
- 16: Mantelabschnitt
- 17, 18: Deckelabschnitt
- 19: Ringspalt
- 20, 21: Ringabschnitt
- 22, 23: Stützabschnitt
- 24, 25: Übergangsabschnitte
- 26, 27: Ausnehmung
- 28, 29: Anlagefläche
- 30, 31: Sicherungsring
- 32, 33: Aktuator
- 34, 35: Hülsenansatz
- 36, 37: Kraftübertragungsglied
- 38, 39: Nocken
- 40, 41: Durchtrittsöffnungen
- 42, 43: Kolben
- 44,45: Zylinderkammer
- 46,47: Axiallager
- 48, 49: Lager
- 50: Elektroantrieb
- 51: Eingriffsmittel (3)
- 52, 53: Eingriffsmittel
- 54, 55: Kupplung
- 56: elektrische Maschine
- 57: Getriebeeinheit
- 58: Motorwelle
- 59,60: Lager
- 61: Antriebsrad
- 62: Getriebewelle
- 63,64: Lager
- 65: Antriebsrad (zweites Zahnrad)
- 66: Abtriebsrad (drittes Zahnrad)
- 67: Ringrad
- 68: Gehäuseabschnitt
- 69: Gehäuseabschnitt
- 70: Zwischenwand
- 71: Zwischenwand
- 72: Lageraufnahmeabschnitt
- 73: Durchgangsöffnung
- 74: Deckelteil
- 75: Lageraufnahmeteil
- 76, 77: Außenlamelle
- 78, 79: Innenlamelle

- A: Drehachse
- B: Breite
- F: Kraft
- R: Richtung
- U: Umfangserstreckung

## Patentansprüche

1. Doppelkupplungseinheit zur variablen Drehmomentverteilung auf zwei Ausgangswellen, umfassend:
ein um eine Drehachse (A2) drehend antreibbares Kupplungseingangsteil (3), ein erstes Lamellenpaket (4) zur Drehmomentübertragung vom Kupplungseingangsteil (3) auf ein erstes Kupplungsausgangsteil (6), wobei das erste Lamellenpaket (4) von einer ersten Druckplatte (8) axial beaufschlagbar ist und über eine erste Zwischenplatte (10) axial gegen das Kupplungseingangsteil (3) abgestützt ist,
ein zweites Lamellenpaket (5) zur Drehmomentübertragung vom Kupplungseingangsteil (3) auf ein zweites Kupplungsausgangsteil (7), wobei das zweite Lamellenpaket (5) von einer zweiten Druckplatte (9) axial beaufschlagbar ist und über eine zweite Zwischenplatte (11) axial gegen das Kupplungseingangsteil (3) abgestützt ist,
**dadurch gekennzeichnet,**
**dass** die erste Zwischenplatte (10) und die zweite Zwischenplatte (11) axial zwischen dem ersten Lamellenpaket (4) und dem zweiten Lamellenpaket (5) angeordnet sind und derart axial ineinandergreifend gestaltet sind, dass sie unabhängig voneinander gegen das Kupplungseingangsteil (3) axial abgestützt sind.

2. Doppelkupplungseinheit nach Anspruch 1,
**dadurch gekennzeichnet,**
**dass** eine erste Anlagefläche (28) der ersten Zwischenplatte (10), die axial vom ersten Lamellenpaket (4) weg weist und die gegen das Kupplungseingangsteil (3) in einer ersten Richtung (R1) axial abgestützt ist, und eine zweite Anlagefläche (29) der zweiten Zwischenplatte (11), die axial vom zweiten Lamellenpaket (5) weg weist und die gegen das Kupplungseingangsteil (3) in einer entgegengesetzten zweiten Richtung (R2) axial abgestützt ist, axial versetzt zueinander angeordnet sind.

3. Doppelkupplungseinheit nach Anspruch 1 oder 2,
**dadurch gekennzeichnet,**
**dass** die erste Zwischenplatte (10) erste Abschnitte und die zweite Zwischenplatte (11) zweite Abschnitte aufweisen, die sich derart axial ineinander erstrecken, dass die erste Zwischenplatte (10) und die zweite Zwischenplatte (11) jeweils außerhalb eines Kraftflusses von der jeweils anderen der ersten und zweiten Zwischenplatte (10; 11) zum Kupplungseingangsteil (3) angeordnet sind.

4. Doppelkupplungseinheit nach einem der Ansprüche 1 bis 3,
**dadurch gekennzeichnet,**
**dass** die erste Zwischenplatte (10) einen ersten Ringabschnitt (20) aufweist, gegen den das erste Lamellenpaket (4) axial abgestützt ist,
**dass** die zweite Zwischenplatte (11) einen zweiten Ringabschnitt (21) aufweist, gegen den das zweite Lamellenpaket (5) axial abgestützt ist,
wobei der erste Ringabschnitt (20) und der zweite Ringabschnitt (21) voneinander axial beabstandet sind.

5. Doppelkupplungseinheit nach einem der Ansprüche 1 bis 4,
**dadurch gekennzeichnet,**
**dass** die erste Zwischenplatte (10) eine Mehrzahl von über den Umfang verteilten ersten Stützabschnitten (22) aufweist, mit denen die erste Zwischenplatte (10) gegen das Kupplungseingangsteil (3) axial abgestützt ist, und,
**dass** die zweite Zwischenplatte (11) eine Mehrzahl von über den Umfang verteilten zweiten Stützabschnitten (23) aufweist, mit denen die zweite Zwischenplatte (11) gegen das Kupplungseingangsteil (3) axial abgestützt ist, wobei die ersten Stützabschnitte (22) und die zweiten Stützabschnitte (23) in Umfangsrichtung versetzt zueinander angeordnet sind.

6. Doppelkupplungseinheit nach Anspruch 5,
**dadurch gekennzeichnet,**
**dass** zwischen den über den Umfang verteilten ersten Stützabschnitten (22) jeweils erste Ausnehmungen (26) gebildet sind, in welche sich die zweiten Stützabschnitte (23) axial hineinerstrecken, und,
**dass** zwischen den über den Umfang verteilten zweiten Stützabschnitten (23) jeweils zweite Ausnehmungen (27) gebildet sind, in welche sich die ersten Stützabschnitte (22) axial hineinerstrecken,
wobei eine Umfangserstreckung (U22) der ersten Stützabschnitte (22) kleiner ist als eine Umfangserstreckung (U27) der zwischen den zweiten Stützabschnitten (23) liegenden zweiten Ausnehmungen (27), und
wobei eine Umfangserstreckung (U23) der zweiten Stützabschnitte (23) kleiner ist als eine Umfangserstreckung (U26) der zwischen den ersten Stützabschnitten (22) liegenden ersten Ausnehmungen (26).

7. Doppelkupplungseinheit nach Anspruch 5 oder 6,
**dadurch gekennzeichnet,**
**dass** die ersten Stützabschnitte (22) und die zweiten Stützabschnitte (23) mit axialer Überdeckung zueinander angeordnet sind, wobei eine axiale Breite (B22) der einander axial überdeckenden ersten und zweiten Stützabschnitte (22; 23) kleiner ist als die Summe der axialen Breiten (B20, B21) des ersten Ringabschnitts (20) und des zweiten Ringabschnitts (21).

8. Doppelkupplungseinheit nach einem der Ansprüche 4 bis 7,
**dadurch gekennzeichnet,**
**dass** zwischen dem ersten Ringabschnitt (20) und den ersten Stützabschnitten (22) jeweils erste Übergangsabschnitte (24) gebildet sind, die axial in erster Richtung (R1) gekröpft sind, und,
**dass** zwischen dem zweiten Ringabschnitt (21) und den zweiten Stützabschnitten (23) jeweils zweite Übergangsabschnitte (25) gebildet sind, die axial in zweiter Richtung (R2) gekröpft sind.

9. Doppelkupplungseinheit nach einem der Ansprüche 5 bis 8,
**dadurch gekennzeichnet,**
**dass** die ersten Stützabschnitte (22) und die zweiten Stützabschnitte (23) mit dem Kupplungseingangsteil (3) drehfest verbunden sind, insbesondere mittels formschlüssiger Eingriffsmittel (52, 53).

10. Doppelkupplungseinheit nach einem der Ansprüche 5 bis 9,
**dadurch gekennzeichnet,**
**dass** die ersten Stützabschnitte (22) und die zweiten Stützabschnitte (23) zwischen zwei Sicherungsringen (30; 31) am Kupplungseingangsteil (3) axial fixiert sind, wobei die zwei Sicherungsringe (30; 31) innerhalb der axialen Erstreckung der ersten und zweiten Zwischenplatte (10; 11) liegen.

11. Doppelkupplungseinheit nach einem der Ansprüche 1 bis 10,
**dadurch gekennzeichnet,**
**dass** die erste Zwischenplatte (10) und die zweite Zwischenplatte (11) gleich gestaltet sind.

12. Doppelkupplungseinheit nach einem der Ansprüche 1 bis 11,
**dadurch gekennzeichnet,**
**dass** ein erster Aktuator (32) zum Beaufschlagen des ersten Lamellenpakets (4) und ein zweiter Aktuator (33) zum Beaufschlagen des zweiten Lamellenpakets (5) vorgesehen sind,
wobei der erste Aktuator (32) und der zweite Aktuator (33) unabhängig voneinander mittels einer Steuereinheit steuerbar sind, so dass ein vom ersten Lamellenpaket (4) auf das erste Ausgangsteil (6) übertragbares erstes Drehmoment und ein vom zweiten Lamellenpaket (5) auf das zweite Ausgangsteil (7) übertragbares zweite Drehmoment unabhängig voneinander variabel einstellbar sind.

13. Doppelkupplungseinheit nach Anspruch 12,
**dadurch gekennzeichnet,**
**dass** das Kupplungseingangsteil (3) als Kupplungskorb gestaltet ist, der in einem ortsfesten Gehäuse (12) drehbar gelagert ist und der einen Aufnahmeraum bildet, in dem das erste Lamellenpaket (4), die erste Zwischenplatte (10), die zweite Zwischenplatte (11) und das zweite Lamellenpaket (5) aufgenommen sind;
wobei der Kupplungskorb einen ersten Deckelabschnitt (17) und einen zweiten Deckelabschnitt (18) aufweist, die den Aufnahmeraum (13) des Kupplungskorbs seitlich begrenzen;
wobei der erste Aktuator (32) außerhalb des Kupplungskorbs angeordnet ist und an dem Gehäuse (12) axial abgestützt ist, wobei ein erstes Kraftübertragungsglied (36) vorgesehen ist, um eine vom ersten Aktuator (32) erzeugte Axialkraft auf das im Kupplungskorb angeordnete erste Lamellenpaket (4) zu übertragen, wobei der erste Deckelabschnitt (17) mehrere umfangsverteilte erste Durchtrittsöffnungen (40) aufweist, durch die sich Nocken (38) des ersten Kraftübertragungsglieds (36) hindurch erstrecken;
wobei der zweite Aktuator (33) außerhalb des Kupplungskorbs angeordnet ist und an dem Gehäuse (12) axial abgestützt ist, wobei ein zweites Kraftübertragungsglied (37) vorgesehen ist, um eine vom zweiten Aktuator (33) erzeugte Axialkraft auf das im Kupplungskorb angeordnete zweite Lamellenpaket (5) zu übertragen, wobei der zweite Deckelabschnitt (18) mehrere umfangsverteilte zweite Durchtrittsöffnungen (41) aufweist, durch die sich Nocken (39) des zweiten Kraftübertragungsglieds (37) hindurch erstrecken.

14. Elektroantrieb zum Antreiben einer Antriebsachse eines Kraftfahrzeugs, umfassend:
eine elektrische Maschine (56) mit einer Motorwelle (58);
eine Getriebeeinheit (57), die ausgestaltet ist, um eine von der elektrischen Maschine (56) eingeleitete Drehbewegung vom Schnellen ins Langsame zu übersetzen;
**gekennzeichnet durch** eine Doppelkupplungseinheit (2) nach einem der Ansprüche 1 bis 13,
wobei das Kupplungseingangsteil (3) von einem Ausgangsrad (66) der Getriebeeinheit (57) drehend antreibbar ist.

15. Elektroantrieb nach Anspruch14,
**dadurch gekennzeichnet,**
**dass** die Motorwelle (58) als Hohlwelle ausgebildet ist, die in einem ortsfesten Gehäuse (12) um eine Drehachse (A58) drehbar gelagert ist, wobei das Kupplungseingangsteil (3) koaxial zur Drehachse (A58) der Motorwelle (58) drehbar gelagert ist;
**dass** die Getriebeeinheit (57) eine Getriebewelle (62) aufweist, die von der Motorwelle (58) drehend antreibbar ist und um eine zur Drehachse (A58) parallele Drehachse (A62) in dem Gehäuse (12) drehbar gelagert ist;
**dass** das erste Kupplungsausgangsteil (6) zum Antreiben einer ersten Ausgangswelle (14) und das zweite Kupplungsausgangsteil (7) zum Antreiben einer zweiten Ausgangswelle (15) ausgestaltet sind, wobei eine der beiden Ausgangswellen (14, 15) sich durch die Hohlwelle der elektrischen Maschine (56) hindurch erstreckt.

## Claims

1. A dual clutch unit for variably distributing torque to two output shafts, comprising:
a clutch input part (3) rotatably drivable about an axis of rotation (A2),
a first disk pack (4) for transmitting torque from the clutch input part (3) to a first clutch output part (6), wherein the first disk pack (4) is axially loadable by a first pressure plate (8) and is supported axially against the clutch input part (3) via a first intermediate plate (10),
a second disk pack (5) for transmitting torque from the clutch input part (3) to a second clutch output part (7), wherein the second disk pack (5) is axially loadable by a second pressure plate (9) and is supported axially against the clutch input part (3) via a second intermediate plate (11),
**characterised in**
**that** the first intermediate plate (10) and the second intermediate plate (11) are axially arranged between the first disk pack (4) and the second disk pack (5) and are axially engaged with each other such that they are axially supported independently of each other against the clutch input part (3).

2. Dual clutch unit according to claim 1,
**characterized in**
**that** a first contact surface (28) of the first intermediate plate (10), which faces axially away from the first disk pack (4) and which is axially supported against the clutch input part (3) in a first direction (R1), and a second contact surface (29) of the second intermediate plate (11), which faces axially away from the second disk pack (5) and which is axially supported against the clutch input part (3) in an opposite second direction (R2), are arranged axially offset relative to each other.

3. Dual clutch unit according to claim 1 or 2,
**characterized in**
**that** the first intermediate plate (10) has first portions and the second intermediate plate (11) has second portions extending axially into each other such that the first intermediate plate (10) and the second intermediate plate (11) are each disposed outside a flux of force from the other of the first and second intermediate plates (10; 11) to the clutch input portion (3).

4. Dual clutch unit according to any one of claims 1 to 3,
**characterized in**
**that** the first intermediate plate (10) has a first ring portion (20) against which the first disk pack (4) is axially supported,
**that** the second intermediate plate (11) has a second ring portion (21), against which the second disk pack (5) is axially supported,
wherein the first ring portion (20) and the second ring portion (21) are axially spaced apart from each other.

5. Dual clutch unit according to any one of claims 1 to 4,
**characterized in**
**that** the first intermediate plate (10) comprises a plurality of first support portions (22) distributed over the circumference, with which the first intermediate plate (10) is axially supported against the clutch input part (3), and
**that** the second intermediate plate (11) comprises a plurality of second support portions (23) distributed over the circumference, with which the second intermediate plate (11) is axially supported against the clutch input part (3), wherein the first support portions (22) and the second support portions (23) are circumferentially offset from each other.

6. Dual clutch unit according to claim 5,
**characterized in**
**that** first recesses (26) are formed respectively between the first support portions (22) distributed over the circumference, into which the second support portions (23) extend axially, and
**that** second recesses (27) are formed respectively between the second support portions (23) distributed over the circumference, into which the first support portions (22) extend axially,
wherein a circumferential extension (U22) of the first support portions (22) is smaller than a circumferential extension (U27) of the second recesses (27) located between the second support portions (23), and
wherein a circumferential extension (U23) of the second support portions (23) is smaller than a circumferential extension (U26) of the first recesses (26) located between the first support portions (22).

7. Dual clutch unit according to claim 5 or 6,
**characterized in**
**that** the first support portions (22) and the second support portions (23) are arranged with an axial overlap with respect to one another, wherein an axial width (B22) of the axially overlapping first and second support portions (22; 23) is smaller than the sum of the axial widths (B20, B21) of the first ring portion (20) and the second ring portion (21).

8. Dual clutch unit according to any one of claims 4 to 7,
**characterized in**
**that** between the first ring portion (20) and the first support portions (22) respectively first transition portions (24) are formed which are axially cranked in the first direction (R1), and
**that** between the second ring portion (21) and the second support portions (23) respectively second transition portions (25) are formed which are axially cranked in the second direction (R2).

9. Dual clutch unit according to any one of claims 5 to 8,
**characterized in**
**that** the first support portions (22) and the second support portions (23) are connected to the clutch input part (3) in a rotationally fixed manner, in particular by of form-locking engaging means (52, 53).

10. Dual clutch unit according to any one of claims 5 to 9,
**characterized in**
**that** the first support portions (22) and the second support portions (23) are axially fixed between two retaining rings (30; 31) at the clutch input part (3), wherein the two retaining rings (30; 31) are arranged within the axial extension of the first and second intermediate plate (10; 11).

11. Dual clutch unit according to any one of claims 1 to 10,
**characterized in**
**that** the first intermediate plate (10) and the second intermediate plate (11) have the same design.

12. Dual clutch unit according to any one of claims 1 to 11,
**characterized in**
**that** a first actuator (32) for loading the first disk pack (4) and a second actuator (33) for loading the second disk pack (5) are provided,
wherein the first actuator (32) and the second actuator (33) are controllable independently of one another by a control unit, so that a first torque transmittable from the first disk pack (4) to the first output part (6) and a second torque transmittable from the second disk pack (5) to the second output part (7) can be variably set independently of each other.

13. Dual clutch unit according to claim 12,
**characterized in**
**that** the clutch input part (3) is configured as a clutch basket which is rotatably supported in a stationary housing (12) and which forms a receiving chamber (13) in which the first disk pack (4), the first intermediate plate (10), the second intermediate plate (11) and the second disk pack (5) are received, wherein the clutch basket has a first cover portion (17) and a second cover portion (18) which laterally delimit the receiving chamber (13) of the clutch basket,
wherein the first actuator (32) is disposed outside the clutch basket and is axially supported on the housing (12), wherein a first force transmission member (36) is provided for transmitting an axial force generated by the first actuator (32) to the first disk pack (4) disposed in the clutch basket, wherein the first cover portion (17) comprises a plurality of circumferentially distributed first through openings (40) through which cams (38) of the first force transmission member (36) extend;
wherein the second actuator (33) is arranged outside the clutch basket and is axially supported on the housing (12), wherein a second force transmission member (37) is provided for transmitting an axial force generated by the second actuator (33) to the second disk pack (5) arranged in the clutch basket, wherein the second cover portion (18) having a plurality of circumferentially distributed second through openings (41) through which cams (39) of the second force transmission member (37) extend.

14. Electric drive for driving a drive axle of a motor vehicle, comprising:
an electric machine (56) with a motor shaft (58);
a transmission unit (57) configured to transmit a rotational movement introduced by the electric machine (56) from high speed to slow speed;
**characterized by** a dual clutch unit (2) according to any one of claims 1 to 13, wherein the clutch input part (3) is rotatably drivable by an output gear (66) of the transmission unit (57).

15. Electric drive according to claim 14,
**characterized in**
**that** the motor shaft (58) is formed as a hollow shaft which is supported in a stationary housing (12) so as to be rotatable about an axis of rotation (A58), wherein the clutch input part (3) is rotatably supported coaxially with the axis of rotation (A58) of the motor shaft (58);
**that** the transmission unit (57) comprises a transmission shaft (62) which is rotatably driveable by the motor shaft (58) and is supported in the housing (12) so as to be rotatable about an axis of rotation (A62) parallel to the axis of rotation (A58);
**that** the first clutch output part (6) is configured to drive a first output shaft (14) and the second clutch output part (7) is configured to drive a second output shaft (15), wherein one of the two output shafts (14, 15) extends through the hollow shaft of the electric machine (56).

## Revendications

1. Unité d'embrayage double pour la répartition de couple de rotation variable sur deux arbres de sortie, comprenant :
une partie d'entrée d'embrayage (3) pouvant être entraînée en rotation sur un axe de rotation (A2), un premier paquet de lamelles (4) pour la transmission du couple de rotation de la partie d'entrée d'embrayage (3) à une première partie de sortie d'embrayage (6), dans laquelle le premier paquet de lamelles (4) peut être sollicité axialement par une première plaque d'appui (8) et est appuyé axialement contre la partie d'entrée d'embrayage (3) par le biais d'une première plaque intermédiaire (10),
un second paquet de lamelles (5) pour la transmission de couple de rotation de la partie d'entrée d'embrayage (3) à une seconde partie de sortie d'embrayage (7), dans laquelle le second paquet de lamelles (5) peut être sollicité axialement par une seconde plaque d'appui (9) et est appuyé axialement contre la partie d'entrée d'embrayage (3) par le biais d'une seconde plaque intermédiaire (11),
**caractérisée en ce que**
la première plaque intermédiaire (10) et la seconde plaque intermédiaire (11) sont disposées axialement entre le premier paquet de lamelles (4) et le second paquet de lamelles (5) et sont ainsi formées en s'engrenant axialement l'une dans l'autre qu'elles sont appuyées axialement indépendamment l'une de l'autre contre la partie d'entrée d'embrayage (3).

2. Unité d'embrayage double selon la revendication 1,
**caractérisée en ce**
**qu'**une première surface d'appui (28) de la première plaque intermédiaire (10) qui est orientée en s'éloignant axialement du premier paquet de lamelles (4) et qui est appuyée axialement contre la partie d'entrée d'embrayage (3) dans une première direction (R1), et une seconde surface d'appui (29) de la seconde plaque intermédiaire (11) qui est orientée en s'éloignant axialement du second paquet de lamelles (5) et qui est appuyée axialement contre la partie d'entrée d'embrayage (3) dans une seconde direction (R2) opposée, sont disposées en étant décalées axialement l'une de l'autre.

3. Unité d'embrayage double selon la revendication 1 ou 2,
**caractérisée en ce**
**que** la première plaque intermédiaire (10) présente des premiers tronçons et la seconde plaque intermédiaire (11) des seconds tronçons qui s'étendent axialement l'un dans l'autre de telle sorte que la première plaque intermédiaire (10) et la seconde plaque intermédiaire (11) sont disposées respectivement hors d'un flux de force de l'autre respective des première et seconde plaques intermédiaires (10 ; 11) par rapport à la partie d'entrée d'embrayage (3).

4. Unité d'embrayage double selon l'une des revendications 1 à 3,
**caractérisée en ce que**
la première plaque intermédiaire (10) présente un premier tronçon annulaire (20) contre lequel le premier paquet de lamelles (4) est appuyé axialement,
que la seconde plaque intermédiaire (11) présente un second tronçon annulaire (21) contre lequel le second paquet de lamelles (5) est appuyé axialement,
dans laquelle le premier tronçon annulaire (20) et le second tronçon annulaire (21) sont distants axialement l'un de l'autre.

5. Unité d'embrayage double selon l'une des revendications 1 à 4,
**caractérisée en ce que**
la première plaque intermédiaire (10) présente une pluralité de premiers tronçons d'appui (22) répartis sur le pourtour, avec lesquels la première plaque intermédiaire (10) est appuyée axialement contre la partie d'entrée d'embrayage (3), et
que la seconde plaque intermédiaire (11) présente une pluralité de seconds tronçons d'appuis (23) répartis sur le pourtour avec lesquels la seconde plaque intermédiaire (11) est appuyée axialement contre la partie d'entrée d'embrayage (3),
dans laquelle les premiers tronçons d'appui (22) et les seconds tronçons d'appui (23) sont disposés décalés entre eux dans le sens du pourtour.

6. Unité d'embrayage double selon la revendication 5,
**caractérisée en ce**
**que** des premiers évidements (26) respectifs sont formés entre les premiers tronçons d'appui (22) répartis sur le pourtour, dans lesquels les seconds tronçons d'appuis (23) s'étendent axialement, et
**que** des seconds évidements (27) respectifs sont formés entre les seconds tronçons d'appui (23) répartis sur le pourtour, dans lesquels les premiers tronçons d'appui (22) s'étendent axialement,
dans laquelle un prolongement du pourtour (U22) des premiers tronçons d'appui (22) est plus petit qu'un prolongement du pourtour (U27) des seconds évidements (27) reposant entre les seconds tronçons d'appui (23), et
dans laquelle un prolongement de pourtour (U23) des seconds tronçons d'appui (23) est plus petit qu'un prolongement de pourtour (U26) des premiers évidements (26) reposant entre les premiers tronçons d'appui (22) .

7. Unité d'embrayage double selon la revendication 5 ou 6,
**caractérisée en ce**
**que** les premiers tronçons d'appui (22) et les seconds tronçons d'appui (23) sont disposés l'un par rapport à l'autre avec un recouvrement axial, dans laquelle une largeur axiale (B22) des premiers et seconds tronçons d'appui (22 ; 23) se recouvrant axialement l'un l'autre est plus petite que la somme des largeurs axiales (B20, B21) du premier tronçon annulaire (20) et du second tronçon annulaire (21).

8. Unité d'embrayage double selon l'une des revendications 4 à 7,
**caractérisée en ce**
**que** des premiers tronçons de transition (24) respectifs sont formés entre le premier tronçon annulaire (20) et les premiers tronçons d'appui (22), qui sont coudés axialement dans la première direction (R1), et
**que** des seconds tronçons de transition (25) respectifs sont formés entre le second tronçon annulaire (21) et les seconds tronçons d'appui (23), qui sont coudés axialement dans la seconde direction (R2).

9. Unité d'embrayage double selon l'une des revendications 5 à 8,
**caractérisée en ce**
**que** les premiers tronçons d'appui (22) et les seconds tronçons d'appuis (23) sont reliés fixes en rotation à la partie d'entrée d'embrayage (3), en particulier par des moyens d'engrènement (52, 53) à complémentarité de formes.

10. Unité d'embrayage double selon l'une des revendications 5 à 9,
**caractérisée en ce**
**que** les premiers tronçons d'appui (22) et les seconds tronçons d'appuis (23) sont fixés axialement sur la partie d'entrée d'embrayage (3) entre deux anneaux de fixation (30 ; 31), dans laquelle les deux anneaux de fixation (30 ; 31) reposent dans le prolongement axial des première et seconde plaques intermédiaires (10 ; 11) .

11. Unité d'embrayage double selon l'une des revendications 1 à 10,
**caractérisée en ce**
**que** la première plaque intermédiaire (10) et la seconde plaque intermédiaire (11) sont formées de la même façon.

12. Unité d'embrayage double selon l'une des revendications 1 à 11,
**caractérisée en ce**
**que** sont prévus un premier actionneur (32) pour solliciter le premier paquet de lamelles (4) et un second actionneur (33) pour solliciter le second paquet de lamelles (5),
dans laquelle le premier actionneur (32) et le second actionneur (33) peuvent être commandés indépendamment l'un de l'autre au moyen d'une unité de commande, de sorte qu'un premier couple de rotation pouvant être transmis du premier paquet de lamelles (4) à la première partie de sortie (6) et un second couple de rotation pouvant être transmis du second paquet de lamelles (5) à la seconde partie de sortie (7) peuvent être réglés de manière variable indépendamment l'un de l'autre.

13. Unité d'embrayage double selon la revendication 12,
**caractérisée en ce**
**que** la partie d'entrée d'embrayage (3) est conçue en tant que cloche d'embrayage qui est disposée en pouvant tourner dans un logement (12) fixe et forme un espace de réception dans lequel le premier paquet de lamelles (4), la première plaque intermédiaire (10), la seconde plaque intermédiaire (11) et le second paquet de lamelles (5) sont reçus ;
dans laquelle la cloche d'embrayage présente un premier tronçon de couvercle (17) et un second tronçon de couvercle (18) qui délimitent latéralement l'espace de réception (13) de la cloche d'embrayage ;
dans laquelle le premier actionneur (32) est disposé hors de la cloche d'embrayage et est appuyé axialement contre le logement (12), dans laquelle un premier membre de transfert de force (36) est prévu pour transmettre une force axiale produite par le premier actionneur (32) au premier paquet de lamelles (4) disposé dans la cloche d'embrayage, dans laquelle le premier tronçon de couvercle (17) présente plusieurs premières ouvertures de passage (40) réparties sur le pourtour au travers desquelles des cames (38) du premier membre de transfert de force (36) s'étendent ;
dans laquelle le second actionneur (33) est disposé hors de la cloche d'embrayage et est appuyé axialement contre le logement (12), dans laquelle un second membre de transfert de force (37) est prévu pour transmettre une force axiale produite par le second actionneur (33) au second paquet de lamelles (5) disposé dans la cloche d'embrayage, dans laquelle le second tronçon de couvercle (18) présente plusieurs secondes ouvertures de passage (41) réparties sur le pourtour au travers desquelles des cames (39) du second membre de transfert de force (37) s'étendent.

14. Propulsion électrique pour entraîner un axe d'entraînement d'un véhicule automobile, comprenant :
une machine électrique (56) avec un arbre de moteur (58) ;
une unité de transmission (57) qui est conçue pour translater de rapide à lent un mouvement de rotation introduit par la machine électrique (56) ;
**caractérisé par** une unité d'embrayage double (2) selon l'une des revendications 1 à 13,
dans laquelle la partie d'entrée d'embrayage (3) peut être entraînée en rotation par une roue de sortie (66) de l'unité de transmission (57).

15. Propulsion électrique selon la revendication 14,
**caractérisée en ce que**
l'arbre de moteur (58) est conçu en tant qu'arbre creux qui est disposé en pouvant tourner sur un axe de rotation (A58) dans un logement fixe (12), dans laquelle la partie d'entrée d'embrayage (3) est disposée en pouvant tourner coaxialement à l'axe de rotation (A58) de l'arbre de moteur (58) ;
que l'unité de transmission (57) présente un arbre de transmission (62) qui peut être entraîné en rotation par l'arbre de moteur (58) et est disposé en pouvant tourner dans le logement (12) sur un axe de rotation (A62) parallèle à l'axe de rotation (A58) ;
que la première partie de sortie d'embrayage (6) est conçue pour entraîner un premier arbre de sortie (14) et la seconde partie de sortie d'embrayage (7) est conçue pour entraîner un second arbre de sortie (15), dans laquelle un des deux arbres de sortie (14, 15) s'étend au travers de l'arbre creux de la machine électrique (56) .
